**Europäisches Patentamt**

**European Patent Office**

**Office européen des brevets**

(11) Veröffentlichungsnummer: **0 218 217**
**A2**

(12) **EUROPÄISCHE PATENTANMELDUNG**

(21) Anmeldenummer: **86113726.3**

(22) Anmeldetag: **03.10.86**

(51) Int. Cl.⁴: **B60K 31/02**

(30) Priorität: **11.10.85 DE 3536330**

(43) Veröffentlichungstag der Anmeldung:
**15.04.87 Patentblatt 87/16**

(84) Benannte Vertragsstaaten:
**DE FR GB IT**

(71) Anmelder: **Mannesmann Kienzle GmbH**
**Postfach 1640 Heinrich-Hertz-Strasse**
**D-7730 Villingen-Schwenningen(DE)**

(72) Erfinder: **Mutz, Gerhard**
**Waldstrasse 23**
**D-7734 Brigachtal(DE)**
Erfinder: **Fichter, Manfred**
**Algenstrasse 8**
**D-7744 Königsfeld(DE)**

(54) **Geschwindigkeitsbegrenzer.**

(57) Für einen aus einer elektronischen Regel-schaltung und einem elektromechanischen Stellaggregat (2), welches über eine Koppeleinrichtung an der Kraftstoffzumeßvorrichtung eines Kraftfahrzeuges angreift, bestehenden Geschwindigkeitsbegrenzer wird vorgeschlagen, die Einbauprobleme der im Fahrerhaus des betreffenden Fahrzeuges anzuordnenden elektronischen Regelschaltung des Geschwindigkeitsbegrenzers dadurch zu vermindern, daß die elektronische Regelschaltung (10,24,30,40) in dem in das Fahrzeug einzubauenden Fahrtschreiber (1) integriert und somit unter Einbeziehung des Fahrtschreibers ein montagefreundliches Geschwindigkeitsbegrenzungssystem geschaffen wird.

FIG. 1

EP 0 218 217 A2

## Geschwindigkeitsbegrenzer

Die Erfindung betrifft einen Geschwindigkeitsbegrenzer mit einem Stellaggregat, in welchem im wesentlichen ein unabhängig von einer Betätigung des Gaspedals auf die Kraftstoffzumeßvorrichtung eines Kraftfahrzeugs einwirkendes Stellglied und ein das Stellglied antreibender Stellmotor angeordnet sind und mit einer elektronischen Regelschaltung, welche ein fahrtabhängiges Ansteuern des Stellmotors gestatten.

Die Zweckmäßigkeit aus wirtschaftlicher Sicht und die Notwendigkeit aufgrund von Verkehrssituationen, der Tendenz zu leistungsstarken und drehmomentkonstanten Fahrzeugmotoren und der Überbelastungsgefahr des Fahrpersonals Geschwindigkeitsbegrenzer, insbesondere in Nutzfahrzeuge höherer Tonnage einzubauen, steht heute im allgemeinen außer Zweifel. Auf der anderen Seite schafft der ungewöhnlich zeitraubende und arbeitsintensive Einbau eines Geschwindigkeitsbegrenzers insbesondere beim Nachrüsten eines Fahrzeuges, abgesehen von der Sorge, daß bei Ausfall des Geschwindigkeitsbegrenzers das betreffende Fahrzeug manövrierunfähig liegenbleibt, eine abwartende und ablehnende Haltung gegenüber einem derartigen Gerät.

In der Regel wird bei dem bekanntermaßen widrigen Einsatzmilieu im Kraftfahrzeug die relativ empfindliche, den Stellmotor des Geschwindigkeitsbegrenzers fahrtabhängig steuernde elektronische Regelschaltung von Ausfällen betroffen sein. D. h. die elektronische Regelschaltung sollte möglichst in einem Raum angeordnet werden, der unter den gegebenen Umständen noch als geschützter Raum angesehen werden kann, während das Stellaggregat allein schon wegen der Vermeidung mechanischer Hysterese möglichst unmittelbar der Kraftstoffzumeßvorrichtung zugeordnet und somit im Motorraum angebracht werden muß. D. h. daß die in geeigneter Weise gekapselte und plombierte elektronische Regelschaltung im Fahrerhaus der betreffenden Fahrzeuge anzuordnen ist. In den meisten Fällen ist jedoch ein solcher Einbau in einem an sich fertig ausgerüsteten Fahrerhause im Gegensatz zu einer Chassis-Befestigung außerhalb des Fahrerhauses nicht zuletzt auch aus ästhetischen Gründen mit erheblichen Anordnungsproblemen und daraus resultierenden umständlichen Montagearbeitsgängen belastet.

Das Ziel der vorliegenden Erfindung war es daher, die Akzeptanz für den Einbau eines Geschwindigkeitsbegrenzers in einem Fahrzeug durch Reduzieren im wesentlichen des Einbauaufwandes zu verbessern.

Die Lösung dieser Aufgabe sieht vor, daß die elektronische Regelschaltung des Geschwindigkeitsbegrenzers in einem dem Fahrerhaus eines Fahrzeuges zugeordneten Fahrtschreiber angeordnet ist und über einen Leitungsstrang und eine am Fahrtschreiber vorgesehene Steckverbindung mit dem im Motorraum des Fahrzeuges eingebauten Stellaggregat in Verbindung steht.

Ein bevorzugtes Ausführungsbeispiel der Erfindung ist dadurch gekennzeichnet, daß die Bauelemente der elektronischen Regelschaltung auf einer parallel zu der die Geschwindigkeitsmeß-und Streckenzählschaltung tragenden Leiterplatte des Fahrtschreibers eingesetzten zweiten Leiterplatte angeordnet sind, daß die Geschwindigkeitswarnlampe des Fahrtschreibers der elektronischen Regelschaltung des Geschwindigkeitsbegrenzers zugeordnet ist, derart daß sie aufleuchtet, wenn das Stellglied des Stellaggregates die Ruheposition verlassen hat und daß die Einstellmittel wenigstens für einen maximalen Geschwindigkeitsgrenzwert derart im Fahrtschreiber angeordnet sind, daß sie im eingebauten Zustand des Fahrtschreibers bei geöffnetem Deckel zugänglich sind.

Die Erfindung bietet nun nicht allein den Vorteil erheblicher Einbauerleichterungen, indem der Einbau der Regelschaltung des Geschwindigkeitsbegrenzers im Fahrerhaus ohne zusätzlich Raum zu beanspruchen und ohne daß zusätzliche Befestigungsmaßnahmen getroffen werden müssen, im Zuge des Einbaus des Fahrtschreibers erfolgt, sondern auch Fertigungsvereinfachungen dadurch, daß ein gemeinsames Gehäuse und eine gemeinsame Plombierung der Einstellelemente vorgesehen sind und die gemeinsame Nutzung von Geber und Meßsignal mit einem Minimum an außen liegenden Leitungsverbindungen ermöglicht ist, was letzten Endes sowohl die Betriebs-als auch die Manipulationssicherheit verbessert. Die Erfindung schafft somit ein kompaktes Geschwindigkeitsbegrenzungssystem, in welchem der Fahrtschreiber als Meß-und Anzeigeaggregat integriert ist.

Das bevorzugte Ausführungsbeispiel sei im folgenden anhand der beigefügten Zeichnungen näher erläutert. Es zeigen

FIG. 1 eine schematische Darstellung des erfindungsgemäßen Geschwindigkeitsbegrenzungssystems,

FIG. 2 einen in einem Armaturenbrett eingebauten, die elektronische Regelschaltung des Geschwindigkeitsbegrenzers enthaltenden Fahrtschreiber.

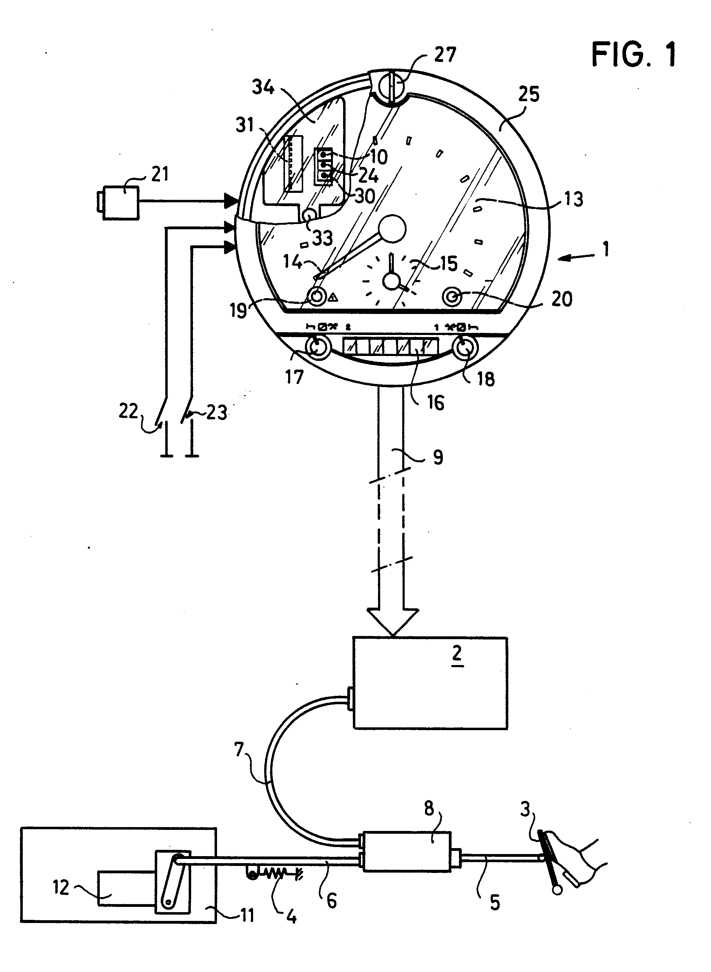

Gemäß der schematischen Darstellung FIG. 1 sind die Einbaukomponenten des erfindungsgemäßen Geschwindigkeitsbegrenzungssystems ein Fahrtschreiber 1, welcher im allgemeinen im Sichtfeld des Fahrers im Armaturenbrett und somit im Fahrerhaus eingebaut ist, ein in geeigneter Weise am Fahrzeugchassis befestigtes, elektromagnetisches Stellaggregat 2 und eine in das den Hub des Gaspedals 3 übertra genden und unter der Wirkung einer Rückstellfeder 4 stehenden Gasgestänges 5, 6 eingefügten mechanischen Koppeleinrichtung, beispielsweise ein mittels eines Bowdenzuges 7 betätigter Verstellzylinder 8 oder ein Schub-Zug-Kabel.

Der Fahrtschreiber 1, dessen aufgabe es bekanntlich ist, weningstens die gefahrene Geschwindigkeit und die gesamte, von dem betreffenden Fahrzeug zurückgelegte Strecke anzuzeigen und sowohl fahrzeugbezogene Daten, wie Geschwindigkeiten, Strecken und Verbräuche, als auch fahrerbezogene Daten, d.h. Arbeitszeitdaten visuell lesbar aufzuzeichnen, enthält zusätzlich die elektronische Regelschaltung des Geschwindigkeitsbegrenzers und ist über einen Leitungsstrang 9 mit dem Stellaggregat 2 verbunden. Aufgabe der elektronischen Regelschaltung ist es, einen beispielsweise mittels eines Potentiometers 10 fest eingestellten Geschwindigkeitsgrenzwert mit der tatsächlichen Geschwindigkeit des Fahrzeuges zu vergleichen und spätestens beim Überschreiten des eingestellten Geschwindigkeitsgrenzwertes einem im Stellaggregat 2 angeordneten Stellmotor ein Signal im Sinne einer Drosselung des Fahrzeugmotors 11 durch Verstellen einer in der dem Fahrzeugmotor 11 zugeordneten Einspritzpumpe 12 befindlichen Kraftstoffzumeßvorrichtung zuzuführen.

Die FIG. 1 zeigt ferner, daß der Fahrtschreiber 1, an dessen Frontseite in bekannter Weise eine Geschwindigkeitsskale 13, ein dieser zugeordneter Zeiger 14, Zeitanzeigemittel 15, ein Wegstreckenzähler 16 sowie Einstellknöpfe 17 und 18 für die Arbeitszeitregistrierung, aber auch Leuchtelemente 19 und 20 einerseits für die Registrierfunktionskontrolle, andererseits für die Begrenzerfunktion sichtbar sind, eingangsseitig mit einem Drehwertgeber 21 sowie mit Schaltern 22 und 23 verbunden ist. Dabei ist der vorzugsweise am Armaturenbrett des betreffenden Fahrzeuges angeordnete Schalter 22 dazu vorgesehen, einen zweiten mittels eines weiteren Potentiometers 24 einstellbaren Geschwindigkeitsgrenzwert anwählen zu können, während der Schalter 23 der Fahrzeugkupplung zugeordnet ist und bei nicht synchronisierten Getrieben einer kurzzeitigen Gasfreigabe dient.

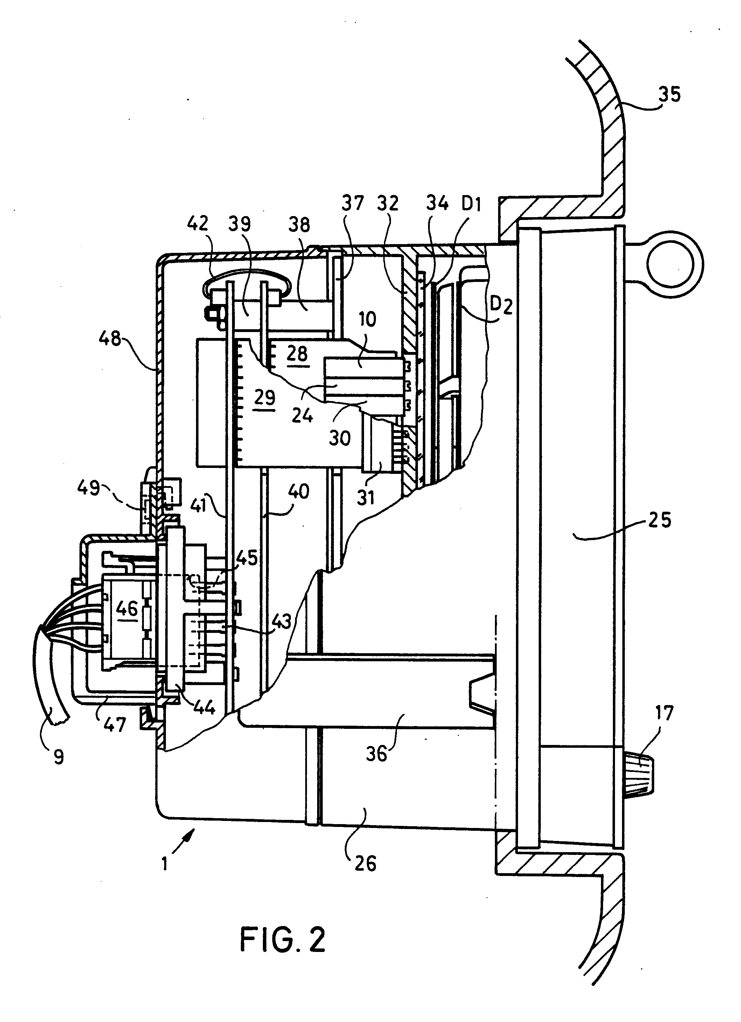

Wird der mit 25 bezeichnete Deckel des Fahrtschreibers, der mittels eines Scharniers mit dem Gehäuse 26 des Fahrtschreibers 1 gelenkig verbunden und mittels eines Schlosses 27 verriegelbar ist, geöffnet, was beispielsweise bei jedem Wechseln der als Aufzeichnungsträger verwendeten Diagrammscheiben $D_1$ und $D_2$ in FIG. 2 erforderlich ist, so sind die auf geeigneten Leiterplatten 28 und 29 angeordneten Potentiometer 10, 24 und ein weiteres, dem Einstellen eines Motordrehzahl-Grenzwertes dienenden Potentiometer 30 sowie ein Codierschalter 31 durch nicht näher bezeichnete Öffnungen in einer Trennwand 32 des Gehäuses 26 zugänglich. Der Zugang ist jedoch erst dann möglich, wenn eine in FIG. 1 transparent dargestellte, mit der Trennwand 32 verbundene und mittels einer Plombe 33 gesicherte Abdeckplatte 34 entfernt worden ist.

Der Codierschalter 31 dient bekanntlich einer infolge unterschiedlicher Fahrzeugdaten erforderlichen Drehwert-Weg-Anpassung der Geschwindigkeitsmeßimpulse an eine Gerätekonstante. Der jeweilige Geschwindigkeitsmeßwert wird dann sowohl vom Fahrtschreiber 1 angezeigt und aufgezeichnet, als auch von der in dem Fahrtschreiber 1 integrierten Regelschaltung des Geschwindigkeitsbegrenzers weiterverarbeitet.

Der Fahrtschreiber 1 ist gemäß FIG. 2 im Armaturenbrett 35 eines Fahrzeuges in der üblichen Weise Mittels Spannpratzen 36, von denen eine gezeigt ist, befestigt. An einer im Gehäuse 26 des Fahrtschreibers 1 befestigten Montageplatte 37, auf der verschiedene, insbesondere für die Registrierfunktion des Fahrtschreibers 1 vorgesehene Bauelemente und Funktionsgruppen angeordnet sind, sind mehrere Säulen -eine ist mit 38 bezeichnet - befestigt, die unter Zwischenlage von Distanzstücken 39 der parallelen Anordnung von zwei, der Einfachheit halber weitgehend unbestückt dargestellten Leiterplatten 40 und 41 deinen. Dabei bilden die Leiterplatte 40 und die auf ihr angeordneten elektronischen Bauelemente zusammen mit den auf der Schaltungsplatte 28 kontaktierten Potentiometern 10, 24 und 30 die elektronische Regelschaltung des Geschwindigkeitsbegrenzers, während die Leiterplatte 41 und die mit dieser verbundenen Bauelemente, beispielsweise die den Codierschalter 31 tragende Leiterplatte 29, der Geschwindigkeitsmessung und Streckenzählung dienen. Die interne elektrische Verbindung der beiden Leiterplatten 40 und 41 erfolgt über steckbare Flachbandkabel, von denen eines mit 42 bezeichnet ist. Die externen Verbindungen erfolgen, wie FIG. 2 zeigt, über an der Leiterplatte 41 befestigte Kontaktzungen 43, denen ein mit der Leiterplatte 41 rastbar verbindbarer Steckersockel 44 zugeordnet ist. In dem Steckersockel 44 sind mehrere Steckerfassungen 45 ausgebildet, von denen eine einem dem Leitungsstrang 9 und somit dem Stellaggregat 2 des Geschwindigkeitsbegrenzers zugeordneten Stecker 46 vorbehalten ist. Der Sicherung sämtlicher mit dem Fahrtschreiber 1 verbundenen Stecker, die in FIG. 2 in Blickrichtung hintereinander angeordnet wären, dient eine Kappe 47, welche an einer das Gehäuse 26 des Fahrtschreibers rückseitig abschließenden Haube 48 befestigt und mit einem Plombierelement 49 versehen ist.

Es sei abschließend noch erwähnt, daß die elektronische Regelschaltung des Geschwindigkeitsbegrenzers auch auf einer dritten, in vorteilhafter Weise "oben liegenden", parallelen Leiterplatte oder in einer anderen, raumnutzenden und leicht montierbaren Weise im Fahrtschreiber 1 angeordnet sein kann, wenn erweiterte Fahrtschreiberfunktionen bereits zwei parallele Leiterplatten erforderlich machen sollten. Um insbesondere bei der Nachrüstung den Umbauaufwand so gering wie möglich zu halten, wäre es in diesem Zusammenhang denkbar, daß eine oder mehrere, die Regelschaltung tragende Leiterplatten dem Boden der Haube 48 zugeordnet sind und vor dem Aufsetzen der Haube 48 auf das Gehäuse 26 lediglich Steckverbindungen in Eingriff gebracht werden müssen.

## Ansprüche

1. Geschwindigkeitsbegrenzer mit einem Stellaggregat, in welchem im wesentlichen ein unabhängig von einer Betätigung des Gaspedals auf die Kraftstoffzumeßvorrichtung eines Kraftfahrzeuges einwirkendes Stellglied und ein das Stellglied antreibender Stellmotor angeordnet sind, und mit einer elektronischen Regelschaltung, welche ein fahrtabhängiges Ansteuern des Stellmotors gestattet,

dadurch gekennzeichnet,

daß die elektronische Regelschaltung des Geschwindigkeitsbegrenzers in einem dem Fahrerhaus eines Fahrzeuges zugeordneten Fahrtschreiber (1) angeordnet ist und über einen Leitungsstrang (9) und eine am Fahrtschreiber (1) vorgesehene Steckverbindung (43, 44, 45, 46) mit dem im Motorraum des Fahrzeuges eingebauten Stellaggregat (2) in Verbindung steht.

2. Geschwindigkeitsbegrenzer nach Anspruch 1,

dadurch gekennzeichnet,

daß die Bauelemente der elektronischen Regelschaltung auf einer parallel zu der die Geschwindigkeitsmeß-und Streckenzählschaltung tragenden Leiterplatte (41) des Fahrtschreibers (1) eingesetzten zweiten Leiterplatte (40) angeordnet sind.

3. Geschwindigkeitsbegrenzer nach Anspruch 1,

dadurch gekennzeichnet,

daß die Geschwindigkeitswarnlampe (20) des Fahrtschreibers (1) der elektronischen Regelschaltung des Geschwindigkeitsbegrenzers zugeordnet ist, derart daß sie aufleuchtet, wenn das Stellglied des Stellaggregates (2) die Ruheposition verlassen hat.

4. Geschwindigkeitsbegrenzer nach Anspruch 1,

dadurch gekennzeichnet,

daß die Einstellmittel wenigstens für einen maximalen Geschwindigkeitsgrenzwert (Potentiometer 10) derart im Fahrtschreiber (1) angeordnet sind, daß sie im eingebauten Zustand des Fahrtschreibers (1) bei geöffnetem Deckel (25) zugänglich sind.

FIG. 1

FIG. 2